(19) Europäisches Patentamt / European Patent Office / Office européen des brevets

(11) **EP 4 311 019 A1**

(12) **EUROPEAN PATENT APPLICATION**
published in accordance with Art. 153(4) EPC

(43) Date of publication:
   **24.01.2024 Bulletin 2024/04**

(21) Application number: **22896134.8**

(22) Date of filing: **18.11.2022**

(51) International Patent Classification (IPC):
   **H01M 50/595** (2021.01)      **H01M 50/586** (2021.01)
   **H01M 10/04** (2006.01)

(52) Cooperative Patent Classification (CPC):
   **H01M 10/04; H01M 10/0587; H01M 50/533;**
   **H01M 50/586; H01M 50/595;** Y02E 60/10;
   Y02P 70/50

(86) International application number:
   **PCT/KR2022/018310**

(87) International publication number:
   **WO 2023/090937 (25.05.2023 Gazette 2023/21)**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority: **19.11.2021 KR 20210160779**

(71) Applicant: **LG ENERGY SOLUTION, LTD.**
   **Seoul 07335 (KR)**

(72) Inventors:
   • **WON, Jin Hyeok**
     **Seoul 34122 (KR)**
   • **RYU, Duk Hyun**
     **Seoul 34122 (KR)**

(74) Representative: **Goddar, Heinz J. et al**
   **Boehmert & Boehmert**
   **Anwaltspartnerschaft mbB**
   **Pettenkoferstrasse 22**
   **80336 München (DE)**

(54) **INSULATION TAPE, JELLY ROLL, SECONDARY BATTERY, BATTERY PACK, AND VEHICLE**

(57)   A jelly roll includes an electrode assembly made by winding a stack of a first electrode, a separator, and a second electrode, and an insulation tape configured to cover at least a part of a lateral surface of the electrode assembly and at least a part of an end of the electrode assembly, in which the insulation tape has at least one notching pattern provided in a region that covers at least a part of the end of the electrode assembly. The jelly roll can be used in a secondary battery, a battery module, and a battery pack.

[FIG. 4]

EP 4 311 019 A1

**Description**

[Technical Field]

This application claims priority to and the benefit of Korean Patent Application No. 10-2021-0160779 filed with the Korean Intellectual Property Office on November 19, 2021, the entire contents of which are incorporated herein by reference.

The present invention relates to an insulation tape, a jelly roll, a secondary battery, a battery pack, and a vehicle.

[Background Art]

A secondary battery is easy to apply to product groups and has high electrical characteristics such as high energy density. Therefore, the secondary battery is widely applied not only to portable devices but also to electric vehicles (EVs) or hybrid electric vehicles (HEVs) driven by electrical driving sources.

The secondary battery attracts attention as a new energy source for improving environmental-friendly characteristics and energy efficiency because the secondary battery achieves a primary advantage of innovatively reducing the use of fossil fuel and does not generate any by-products from the use of energy.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell, i.e., a unit battery cell is about 2.5 V to 4.5 V. Therefore, when an output voltage higher than the operating voltage is required, a plurality of battery cells is connected in series and constitutes a battery pack. In addition, the plurality of battery cells is connected in parallel and constitutes the battery pack depending on a charge/discharge capacity required for the battery pack. Therefore, the number of battery cells included in the battery pack and the type of electrical connection between the battery cells may be variously set depending on required output voltages and/or charge/discharge capacities.

[Detailed Description of the Invention]

[Technical Problem]

An object of the present invention is to provide a jelly roll and a secondary battery that may implement high-energy density.

Another object of the present invention is to provide an insulation tape for implementing the jelly roll.

[Technical Solution]

An embodiment of the present invention provides a jelly roll including: an electrode assembly made by winding a stack of a first electrode, a separator, and a second electrode; and an insulation tape configured to cover at least a part of a lateral surface of the electrode assembly and at least a part of an end of the electrode assembly. The insulation tape has at least one notching pattern provided in a region that covers at least a part of the end of the electrode assembly.

Another embodiment of the present invention provides an insulation tape, i.e., an insulation tape attached to cover at least a part of a lateral surface of an electrode assembly made by winding a stack of a first electrode, a separator, and a second electrode, and cover at least a part of the end of the electrode assembly. The insulation tape has at least one notching pattern provided on at least one edge portion.

Still another embodiment of the present invention provides a secondary battery including the jelly roll according to the above-mentioned embodiment.

[Advantageous Effects]

In the related art in which the insulation tape is used to cover both the lateral surface and the end of the electrode assembly, the portions of the insulation tape overlap one another at the end of the electrode assembly perpendicular to the winding axis. For this reason, a stepped portion is formed, which inevitably causes separation between the components positioned at the end of the electrode assembly. The occurrence of the separation may cause a defect of the electrical connection between the electrode tab part and the electrode terminal part.

According to the embodiments of the present invention, the region in which the portions of the insulation tape overlap one another at the end of the electrode assembly is minimized or particularly eliminated. It is possible to prevent a problem of separation in which a space is formed with another component provided at the end of the electrode assembly, for example, a space is formed between the end of the electrode assembly and an additional insulation member or a current collecting plate. Therefore, it is possible to prevent a defect of the electrical connection between the electrode tab part and the electrode terminal part. In addition, it is possible to prevent a welding defect in case that welding is performed to electrically connect the electrode tab part to the electrode terminal part directly or through the current collecting plate.

The tab structure of the electrode included in the electrode assembly is formed as the non-coated portion of the current collector, on which no electrode active material is not applied, by preventing the separation at the end of the electrode assembly as described above, which makes it possible to increase electric current to be applied to the battery. Therefore, the size of the battery may be increased, the high-energy density may be implemented, and the costs may be reduced.

[Brief Description of Drawings]

FIG. 1 illustrates photographs for comparing, at an end of an electrode assembly, a case (left) in which an insulation tape is attached and a case (right) in which an insulation tape having a notching pattern is attached.

FIG. 2 illustrates photographs for comparing, at a lateral surface of the electrode assembly, a case (left) in which an insulation tape having no notching pattern is attached and a case (right) in which an insulation tape having a notching pattern is attached.

FIG. 3 illustrates photographs for comparing a case (left) in which an insulation tape having no notching pattern is attached and a case (right) in which an insulation tape having a notching pattern is attached in terms of whether separation occurs when an additional insulation member is positioned on an upper surface of the electrode assembly.

FIG. 4 is a view illustrating a shape of the notching pattern of the insulation tape according to the embodiment of the present invention and a state made after the insulation tape is attached.

FIG. 5 is a view illustrating a schematic configuration of a secondary battery according to the embodiment of the present invention.

FIG. 6 is a longitudinal sectional view of the secondary battery in FIG. 5.

FIGS. 7A and 7B are longitudinal sectional views illustrating a schematic configuration of the secondary battery according to the embodiment of the present invention, in which FIG. 7A is a view illustrating a case in which a 'ㄷ'-shaped insulation member is included, and FIG. 7B is a view illustrating a case in which a '—'-shaped insulation member is included.

FIG. 8 is a view illustrating a schematic configuration of the electrode assembly included in the secondary battery in FIG. 5.

FIG. 9 is a view illustrating a schematic configuration of an electrode assembly according to another embodiment of the present invention.

FIG. 10 is a view illustrating an end of the electrode assembly to calculate an area of the insulation tape that covers the end of the electrode assembly.

FIG. 11 is a photograph for identifying separation in Example 1, FIG. 12 is a photograph for identifying separation in Comparative Example 1, and FIG. 13 is a photograph for identifying separation in Comparative Example 3.

FIG. 14 is a graph for comparing AC resistance measurement values of Examples 1 and 2 and Comparative Examples 1 to 3.

FIG. 15 is a view illustrating a schematic configuration of a battery pack including the secondary battery in FIG. 6.

FIG. 16 is a view illustrating a schematic configuration of a vehicle including the battery pack in FIG. 15.

[Explanation of Reference Numerals and Symbols]

1: Secondary battery
2: Pack housing
3: Battery pack
5: Vehicle
10: Electrode assembly
10': Jelly roll
C: Mandrel part
Cd: Diameter of mandrel part
11: First electrode

11a: Non-coated portion

11b: Coated portion

12: Second electrode

12a: Non-coated portion

12b: Coated portion

13: Separator

20: Battery can

21: Beading portion

22: Crimping portion

30: Sealing body

40: Electrode terminal

45: Through-hole

50: First current collecting plate

60: Insulation member

70: Gasket

80: Second current collecting plate

90: Sealing gasket

100: Insulation tape

100': Separation portion of insulation tape

110: Portion of insulation tape that covers lateral surface of electrode assembly

120: Portion of insulation tape that covers end of electrode assembly

120d: Length of portion of insulation tape that covers end of electrode assembly

130: Shape of notching pattern

140: Flag shape

D: Diameter of end perpendicular to winding axis of electrode assembly

[Best Mode]

Terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method.

Throughout the present specification, unless explicitly described to the contrary, the word "comprise/include" and variations such as "comprises/includes" or "comprising/including" will be understood to imply the inclusion of stated elements, not the exclusion of any other elements.

In addition, the term "part", "device", or the like, which is described in the specification, means a unit that processes one or more functions or operations. Hereinafter, embodiments of the present invention will be described with reference to the drawings.

An embodiment of the present invention provides a jelly roll including: an electrode assembly made by winding a stack of a first electrode, a separator, and a second electrode; and an insulation tape configured to cover at least a part of a lateral surface of the electrode assembly and at least a part of an end of the electrode assembly. The insulation tape has at least one notching pattern provided in a region that covers at least a part of the end of the electrode assembly.

The notching pattern of the insulation tape means a pattern having a groove portion made by cutting an edge of the insulation tape.

The end of the electrode assembly means an end of a winding axis of the electrode assembly based on a vertical direction. The lateral surface of the electrode assembly means a side of an outer surface of the electrode assembly that is parallel to the winding axis. The notching pattern of the insulation tape may minimize a region in which portions of the insulation tape overlap one another in the region that covers at least a part of the end of the electrode assembly. Therefore, the separation is prevented at the end of the electrode assembly, such that the electrode assembly may be compactly packed in a battery can. Furthermore, the separation at the end of the electrode assembly is prevented because of the characteristics of the battery, such that a defect of electrical connection between an electrode tab part and an electrode terminal part may be prevented, resistance may be decreased, and high energy density may be maintained.

The electrode tab part may be a first electrode tab part or a positive electrode tab part of the electrode assembly, i.e., a first electrode non-coated portion or a positive electrode non-coated portion. The electrode terminal part may be a first electrode terminal part or a positive electrode terminal part.

According to the embodiment of the present invention, an area in which the portions of the insulation tape overlap one another is 10% or less of an overall area that covers the end of the electrode assembly.

The area in which the portions of the insulation tape overlap one another may be 9% or less, 8% or less, or 7% or less of the overall area that covers the end of the electrode assembly. More particularly, the portions of the insulation tape may not overlap one another in the region that covers the end of the electrode assembly.

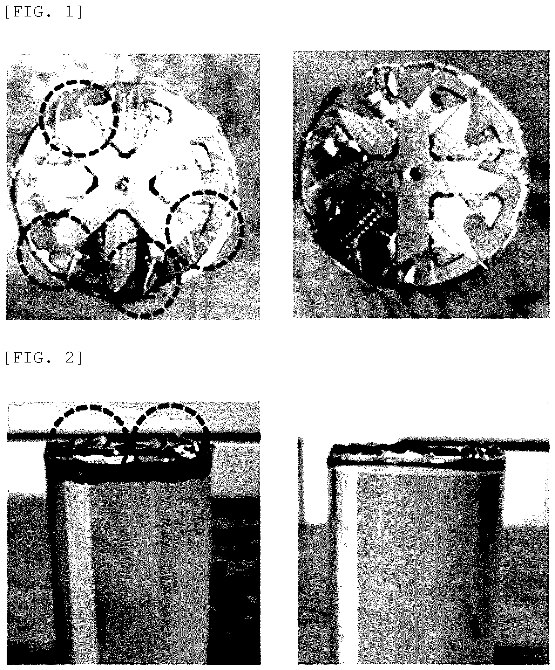

FIG. 1 illustrates photographs for comparing, at the end of the electrode assembly, a case (left) in which an insulation tape having no notching pattern is attached and a case (right) in which an insulation tape having a notching pattern is attached. In the left photograph, portions (indicated by circles) in which the portions of the insulation tape overlap one another are observed. However, the portions of the insulation tape overlapping one another are not observed in the right photograph.

FIG. 2 illustrates photographs for comparing, at a lateral surface of the electrode assembly, a case (left) in which an insulation tape having no notching pattern is attached and a case (right) in which an insulation tape having a notching pattern is attached. In the left photograph, stepped portions (indicated by circles) made by the overlapping portions of the insulation tape are observed. However, no stepped portion made by the overlapping portions of the insulation tape is not observed in the right photograph.

According to the embodiment of the present invention, the insulation tape may have two or more notching patterns. A flag shape provided between the two adjacent notching patterns may be at least one of a trapezoidal shape, a quadrangular shape, a parallelogrammatic shape, a triangular shape, and a semi-circular shape.

The flag shape may be provided in the region in which the insulation tape extends from the lateral surface of the electrode assembly and covers the end of the electrode assembly. The flag shapes do not overlap one another at the end of the electrode assembly. The flag shape is not limited thereto. Any flag shape may be applied to the present invention as long as the flag shapes do not overlap one another at the end of the electrode assembly.

According to the embodiment of the present invention, a shape of the notching pattern of the insulation tape is at least one of a trapezoidal shape, a quadrangular shape, a parallelogrammatic shape, a triangular shape, and a semi-circular shape.

The shape of the notching pattern is not limited thereto. Any shape of the notching pattern may be applied to the present invention as long as the portions of the insulation tape do not overlap one another at the end of the electrode assembly.

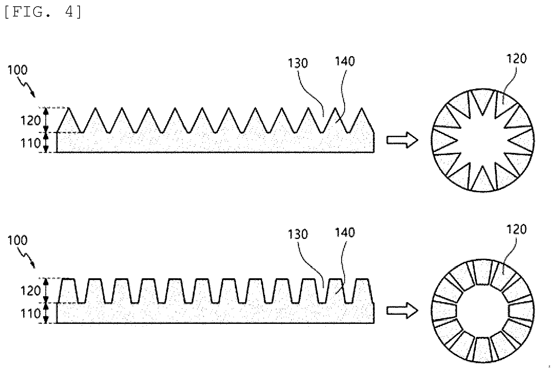

FIG. 4 is a view illustrating a shape of the notching pattern of the insulation tape according to the embodiment of the present invention and a state made after the insulation tape is attached.

For example, FIG. 4 (the top side) illustrates that the shape 130 of the notching pattern is a triangular shape, the flag shape 140 is a triangular shape, and a shape of the insulation tape provided at the end of the electrode assembly is a triangular shape. As another example, FIG. 4 (the bottom side) illustrates that the shape 130 of the notching pattern is a trapezoidal shape, the flag shape 140 is a trapezoidal shape, and the shape of the insulation tape 120 provided at the end of the electrode assembly is a trapezoidal shape.

According to the embodiment of the present invention, at least one of the first electrode and the second electrode includes a current collector and an electrode active material layer provided on the current collector. The current collector includes a non-coated portion on which no electrode active material layer is provided. At least a part of the non-coated portion is exposed to the lateral surface of the electrode assembly, and the insulation tape is provided to cover the non-coated portion on the lateral surface of the electrode assembly.

At least a part of the non-coated portion provided on the lateral surface of the electrode assembly may be used as an electrode tab as it is.

The insulation tape is provided to cover the non-coated portion, which makes it possible to prevent electrical contact with the battery can. The notching pattern of the insulation tape prevents the separation at the end of the electrode assembly, which makes it possible to prevent a defect of the electrical connection between the electrode tab part and the electrode terminal part.

According to the embodiment of the present invention, the insulation tape is provided to cover 5% to 60% of the first or second electrode exposed to the end of the electrode assembly.

According to the embodiment of the present invention, at least a part of the non-coated portion is exposed to the end of the electrode assembly, and the insulation tape is provided to cover 5% to 60% of the non-coated portion at the end of the electrode assembly.

The first or second electrode may be exposed to the end of the electrode assembly. Specifically, at least a part of the non-coated portion of the first or second electrode, on which no electrode active material layer is provided, may be exposed.

At least a part of the non-coated portion provided at the end of the electrode assembly may be used as an electrode tab as it is. As described below, a current collecting plate provided at the end of the electrode assembly may be provided, and at least a part of the non-coated portion may be electrically connected to the current collecting plate.

Therefore, the non-coated portion of the first or second electrode and/or at least a part of the current collecting plate connected to the non-coated portion may be exposed to the end of the electrode assembly.

The configuration in which the insulation tape is provided to cover 5% to 60% of the first or second electrode or the non-coated portion of the end of the electrode assembly may mean that the insulation tape covers 5% to 60% of the first or second electrode or the non-coated portion exposed from an outer peripheral surface of the end of the electrode assembly.

The insulation tape may be provided to cover 5% or more, 100 or more, 15% or more, 20% or more, or 25% or more of the first or second electrode or the non-coated portion of the end of the electrode assembly.

The insulation tape may be provided to cover 60% or less, 55% or less, 50% or less, 45% or less, 40% or less, or 35% or less of the first or second electrode or the non-coated portion of the end of the electrode assembly.

The insulation tape is provided to cover 5% to 60% of the first or second electrode, the non-coated portion of the first or second electrode, and/or the current collecting plate connected to the non-coated portion of the end of the electrode assembly, which makes it possible to prevent electrical contact with the battery can. The notching pattern of the insulation tape prevents the separation at the end of the electrode assembly, which makes it possible to prevent a defect of the electrical connection between the electrode tab part and the electrode terminal part.

According to the embodiment of the present invention, a thickness of the insulation tape is 10 um to 100 um.

The thickness of the insulation tape may be 10 um or more, 13 um or more, 15 um or more, or 17 um or more. The thickness of the insulation tape may be 100 um or less, 90 um or less, 80 um or less, 70 um or less, 60 um or less, 50 um or less, 40 um or less, or 30 um or less.

When the above-mentioned range is satisfied, the insulation tape may cover the non-coated portion, which makes it possible to prevent electrical contact with the battery can, prevent the separation at the end of the electrode assembly, and prevent a defect of the electrical connection between the electrode tab part and the electrode terminal part.

According to the embodiment of the present invention, the insulation tape may include a base layer and an adhesive layer. A thickness of the base layer is 3 um to 25 um, and a thickness of the adhesive layer is 2 um to 20 um.

The insulation tape may include the base layer and the adhesive layer. A thickness of the insulation tape including the base layer and the adhesive layer may be 15 um or more, 20 um or more, 25 um or more, or 30 um or more. The thickness of the insulation tape including the base layer and the adhesive layer may be 90 um or less, 80 um or less, 70 um or less, or 60 um or less.

A thickness of the base layer of the insulation tape may be 5 um or more, 7 um or more, 9 um or more, or 11 um or more. The thickness of the base layer of the insulation tape may be 23 um or less, 21 um or less, 19 um or less, or 17 um or less.

A thickness of the adhesive layer of the insulation tape may be 4 um or more, 6 um or more, 8 um or more, or 10 um or more. The thickness of the adhesive layer of the insulation tape may be 18 um or less, 16 um or less, 14 um or less, or 12 um or less.

When the above-mentioned range is satisfied, the insulation tape having the notching pattern may be further properly attached to the end of the electrode assembly. Specifically, the insulation tape is advantageous when the thickness of the base layer of the insulation tape is small. The insulation tape is more appropriately attached to the end of the electrode assembly as the thickness of the adhesive layer of the insulation tape increases.

In particular, the thickness of the base layer of the insulation tape is decreased by about 50% in comparison with that in the related art. The thickness of the adhesive layer is increased by about 150% in comparison with that in the related art. In the above-mentioned range, in comparison with the insulation tape in the related art, the thickness of the base layer of the insulation tape is small, and the thickness of the adhesive layer of the insulation tape is large, such that the insulation tape may be advantageously attached to the end of the electrode assembly.

According to the embodiment of the present invention, the insulation tape includes one or more materials selected from a group consisting of polyimide, polyethylene, polypropylene, polytetrafluoroethylene, polyethylene terephthalate, and polybutylene terephthalate. In addition, the material of the insulation tape is not particularly limited as long as the material of the insulation tape is an insulating material that is not eluted by an electrolyte or swelled or does not cause a side reaction.

According to the embodiment of the present invention, the current collecting plate provided at the end of the electrode assembly is further included. The current collecting plate may be positioned between the insulation tape and the electrode assembly in the region in which the insulation tape covers the end of the electrode assembly. Alternatively, the current collecting plate may be positioned at an end opposite to the side of the electrode assembly facing the insulation tape.

The current collecting plate, which is positioned between the insulation tape and the electrode assembly among the current collecting plates provided at the ends of the electrode assembly, may be a first current collecting plate, and the current collecting plate, which is positioned at an end opposite to the side of the electrode assembly facing the insulation tape, may be a second current collecting plate.

Specifically, the first current collecting plate may be electrically connected to the non-coated portion, and the side of the first current collecting plate opposite to the non-coated portion may be electrically connected to the electrode terminal. In this case, because the insulation tape having the notching pattern is provided, the separation may be prevented at the end of the electrode assembly, which makes it possible to facilitate the electrical connection of the electrode terminal part and prevent occurrence of a welding defect.

According to the embodiment of the present invention, an insulation member may be further included and provided at the end of the electrode assembly and cover the end of the electrode assembly or cover at least a part of the end of the electrode assembly and at least a part of the lateral surface of the electrode assembly.

The insulation member may be an insulator. The insulator may prevent electrical contact between the electrode tab part of the jelly roll and the battery can, thereby preventing a short circuit of the electrode.

In case that the insulation tape having the notching pattern is attached, the region in which the portions of the insulation tape overlap one another at the end of the electrode assembly is minimized, which makes it possible to reduce an interval with the insulation member and prevent a defect of the electrical connection between the electrode tab part and the electrode terminal part.

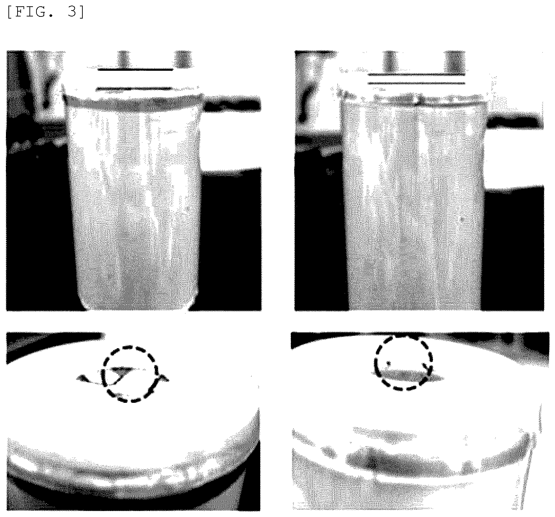

FIG. 3 illustrates photographs for comparing a case (left) in which an insulation tape having no notching pattern is attached and a case (right) in which an insulation tape having a notching pattern is attached in terms of whether separation occurs when an additional insulation member is positioned on an upper surface of the electrode assembly.

The separation of the insulation member is larger in case that the insulation tape having no notching pattern is attached than in case that the insulation tape having the notching pattern is attached.

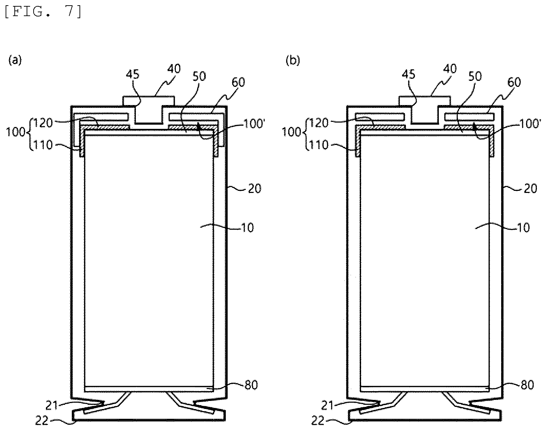

FIGS. 7A and 7B are longitudinal sectional views illustrating a schematic configuration of the secondary battery according to the embodiment of the present invention, in which FIG. 7A is a view illustrating a case in which a 'ㄴ'-shaped insulation member is included, and FIG. 7B is a view illustrating a case in which a '⸻'-shaped insulation member is included.

Referring to FIG. 7A, according to the embodiment, an insulation member 60 may be provided to cover at least a part of the end of the electrode assembly and at least a part of the lateral surface of the electrode assembly. For example, the insulation member 60 may be a 'ㄴ'-shaped insulation member.

Referring to FIG. 7B, according to another embodiment, the insulation member 60 may be provided at the end of the electrode assembly and cover at least a part of the end of the electrode assembly. For example, the insulation member 60 may be a '-'-shaped insulation member.

When the insulation tape 100 having the notching pattern is attached in case that the insulation member 60 is included, the region in which the portions of the insulation tape overlap one another at the end of the electrode assembly may be minimized, and the interval with the insulation member 60 may be decreased. Therefore, it is possible to prevent the separation between the electrode tab part and the electrode terminal part and prevent a defect of the electrical connection.

Another embodiment of the present invention provides an insulation tape, i.e., an insulation tape attached to cover at least a part of a lateral surface of an electrode assembly, which has a structure made by winding a stack of a first electrode, a separator, and a second electrode, and cover at least a part of the end of the electrode assembly. The insulation tape has at least one notching pattern provided on at least one edge portion.

According to still another embodiment of the present invention, the insulation tape has two or more notching patterns, a flag shape provided between the two adjacent notching patterns is at least one of a trapezoidal shape, a quadrangular shape, a parallelogrammatic shape, a triangular shape, and a semi-circular shape, and a shape of the notching pattern of the insulation tape is at least one of a trapezoidal shape, a quadrangular shape, a parallelogrammatic shape, a triangular shape, and a semi-circular shape.

In this case, the description of the jelly roll may be applied to the description related to the shape, the thickness, the material, and the structure of the notching pattern of the insulation tape.

Yet another embodiment of the present invention provides a secondary battery including: a jelly roll according to the above-mentioned embodiment; a battery can configured to accommodate the jelly roll and having an opening portion at one side thereof; an electrode terminal riveted through a through-hole formed in a bottom of the battery can; a gasket provided between an outer diameter of the through-hole and the electrode terminal; and a sealing body configured to seal the opening portion of the battery can.

According to yet another embodiment of the present invention, the first electrode may be electrically connected to the electrode terminal, the second electrode may be electrically connected to the battery can, and the sealing body may be insulated from the battery can.

In this case, the description of the jelly roll may be applied to the description related to the shape, the thickness, the material, and the structure of the notching pattern of the insulation tape included in the jelly roll included in the secondary battery.

According to the embodiment, the first electrode may be a positive electrode, and the second electrode may be a negative electrode.

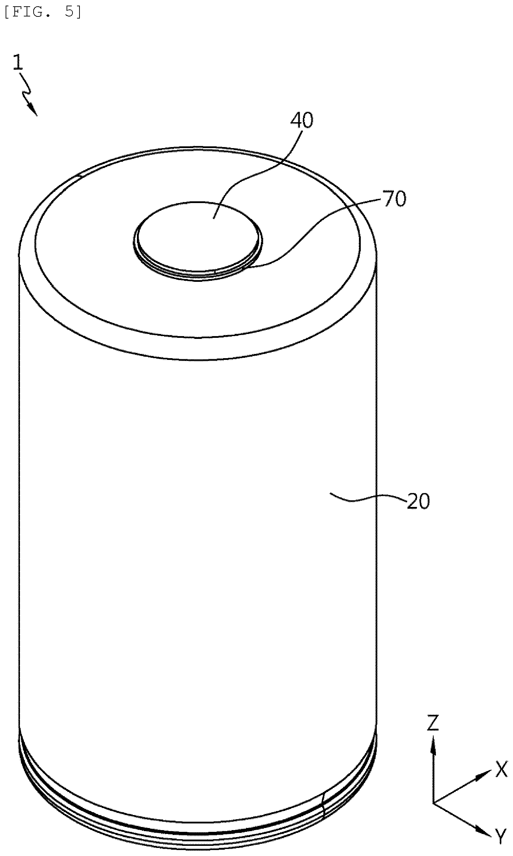

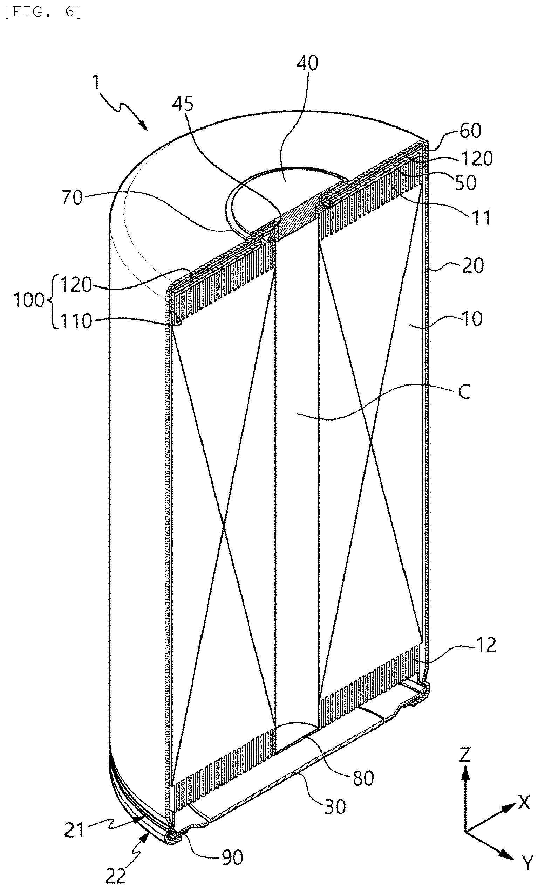

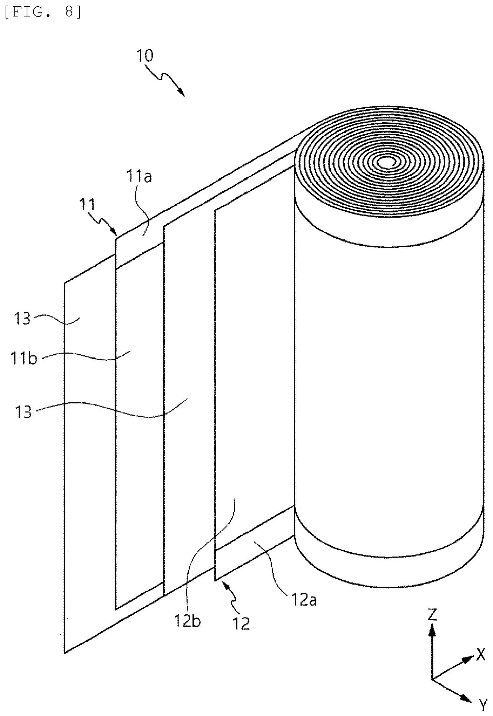

FIG. 5 is a view illustrating a schematic configuration of the secondary battery according to the embodiment of the present invention, FIG. 6 is a longitudinal sectional view of the secondary battery in FIG. 5, and FIG. 8 is a view illustrating a schematic configuration of the electrode assembly included in the secondary battery in FIG. 5.

Referring to FIGS. 5, 6, and 8, a secondary battery 1 according to an embodiment of the present invention includes an electrode assembly 10, a battery can 20, a sealing body 30, and an electrode terminal 40. The jelly roll may include the electrode assembly 10. In addition to the above-mentioned constituent elements, the secondary battery 1 may additionally and further include a first current collecting plate 50, the insulation member 60, a gasket 70, a second current collecting plate 80, and/or a sealing gasket 90.

Referring to FIGS. 5, 6, and 8, the electrode assembly 10 includes a first electrode 11, i.e., a positive electrode, a second electrode 12, i.e., a negative electrode, and a separator 13 interposed between the first electrode 11 and the second electrode 12. The first electrode 11 and the second electrode 12 may each have a sheet shape. For example, the electrode assembly 10 may have a jelly-roll shape. That is, the electrode assembly 10 may be manufactured by winding a stack, which is made by sequentially stacking the first electrode 11, the separator 13, the second electrode 12, and the separator 13 at least once, around a winding center C. In this case, an additional separator 13 may be provided on an outer peripheral surface of the electrode assembly 10 to implement insulation from the battery can 20.

The first electrode 11 and the second electrode 12 may respectively include non-coated portions 11a and 12a at long side ends thereof, and the non-coated portions 11a and 12a are not coated with the active material layer. The first electrode 11 and the second electrode 12 may respectively include coated portions 11b and 12b that are regions coated with the active material layer, except for the non-coated portions 11a and 12a.

Specifically, the first electrode 11 includes a first electrode current collector and a first electrode active material applied onto one surface or two opposite surfaces of the first electrode current collector. The region in which the first electrode active material is applied onto the first electrode current collector is referred to as the coated portion 11b provided on the first electrode 11. The non-coated portion 11a onto which no first electrode active material is applied may be provided at one side end of the first electrode current collector based on a width direction (a direction parallel to a Z-axis). At least a part of the non-coated portion 11a is used as an electrode tab as it is. That is, the non-coated portion 11a serves as the non-coated portion 11a provided on the first electrode 11. The non-coated portion 11a provided on the first electrode 11 is provided at an upper side of the electrode assembly 10 based on a height direction (the direction parallel to the Z-axis), and the electrode assembly 10 is accommodated in the battery can 20. An additional insulation layer may be provided on a boundary between the non-coated portion 11a and the coated portion 11b of the first electrode 11. The insulation layer may prevent a short circuit of the electrode even though the separator is shrunk.

The second electrode 12 includes a second electrode current collector and a second electrode active material applied onto one surface or two opposite surfaces of the second electrode current collector. The region in which the second electrode active material is applied onto the second electrode current collector is referred to as the coated portion 12b provided on the second electrode 12. The non-coated portion 12a onto which no second electrode active material is applied may be provided at the other side end of the second electrode current collector based on the width direction (the direction parallel to the Z-axis). At least a part of the non-coated portion 12a is used as an electrode tab as it is. That is, the non-coated portion 12a serves as the non-coated portion 12a provided on the second electrode 12. The non-coated portion 12a provided on the second electrode 12 is provided at a lower side of the electrode assembly 10 based on the height direction (the direction parallel to the Z-axis), and the electrode assembly 10 is accommodated in the battery can 20.

The non-coated portion 11a provided on the first electrode 11 and the non-coated portion 12a provided on the second electrode 12 may protrude in opposite directions. For example, referring to FIG. 8, the non-coated portion 11a provided on the first electrode 11 may protrude toward the upper side of the electrode assembly 10 based on the height direction (the direction parallel to the Z-axis), and the non-coated portion 12a provided on the second electrode 12 may protrude toward the lower side of the electrode assembly 10 based on the height direction (the direction parallel to the Z-axis). Therefore, the non-coated portion 11a provided on the first electrode and the non-coated portion 12a provided on the second electrode may extend and protrude in the opposite directions in the width direction of the electrode assembly 10, i.e., the height direction (the direction parallel to the Z-axis) of the secondary battery 1.

According to the embodiment, the first electrode may be a positive electrode, and the second electrode may be a negative electrode.

In the present invention, any active material publicly known in the art may be used, without limitation, as the positive electrode active material applied onto the positive plate and the negative electrode active material applied onto the negative plate.

A typical positive electrode active material, which may be used for a positive electrode of an electrochemical element in the related art, may be used as a non-restrictive example of the positive electrode active material. In particular, lithium manganese oxide, lithium cobalt oxide, lithium nickel oxide, lithium iron oxide, or a combination thereof, i.e., lithium composite oxide may be used.

As an example, the positive electrode active material may include an alkaline metal compound expressed by a general chemical formula $A[A_xM_y]O_{2+z}$ (A includes one or more elements among Li, Na, and K, M includes one or more elements selected from Ni, Co, Mn, Ca, Mg, Al, Ti, Si, Fe, Mo, V, Zr, Zn, Cu, Al, Mo, Sc, Zr, Ru, and Cr, $x \geq 0$, $1 \leq x+y \leq 2$, and $-0.1 \leq z \leq 2$ in which stoichiometric coefficients of materials included in x, y, z, and M are selected so that the compound is kept neutral electrically).

As another example, the positive electrode active material may be an alkaline metal compound $xLiM^1O^2$-(1-$x$)$Li_2M^2O_3$ ($M^1$ includes one or more elements having average oxidation state 3, $M^2$ includes one or more elements having average oxidation state 4, and $0 \le x \le 1$) disclosed in US 6,677,082, US 6,680,143, and the like.

As still another example, the positive electrode active material may be lithium metal phosphate expressed by a general chemical formula $Li_aM^1_xFe_{1-x}M^2_yP_{1-y}M^3_zO_{4-z}$ ($M^1$ includes one or more elements selected from Ti, Si, Mn, Co, Fe, V, Cr, Mo, Ni, Nd, Al, Mg, and Al, $M^2$ includes one or more elements selected from Ti, Si, Mn, Co, Fe, V, Cr, Mo, Ni, Nd, Al, Mg, Al, As, Sb, Si, Ge, V, and S, $M^3$ includes halogen family elements selectively including F, $0 < a \le 2$, $0 \le x \le 1$, $0 \le y < 1$, and $0 \le z < 1$ in which stoichiometric coefficients of materials included in a, x, y, z, $M^1$, $M^2$, and $M^3$ are selected so that the compound is kept neutral electrically) or $Li_3M_2(PO_4)_3$ (M includes one or more elements selected from Ti, Si, Mn, Fe, Co, V, Cr, Mo, Ni, Al, Mg, and Al).

In particular, the positive electrode active material may include primary particles and/or secondary particles in which the primary particles are agglomerated.

A typical negative electrode active material, which may be used for a negative electrode of an electrochemical element in the related art, may be used for a non-restrictive example of the negative electrode active material. In particular, a lithium adsorption material such as lithium metal or lithium alloy, carbon, petroleum coke, activated carbon, graphite, or other carbon may be used.

As an example, carbon materials, lithium metal or lithium metal compound, silicon or silicon compound, tin or tin compound, and the like may be used as the negative electrode active material. A metal oxide such as $TiO_2$ and $SnO_2$ having electric potential of less than 2 V may also be used as the negative electrode active material. Low-crystalline carbon, high-crystalline carbon, and the like may be used as the carbon material.

A porous polymer film, for example, a porous polymer film made of polyolefin-based polymer such as ethylene homopolymer, propylene homopolymer, ethylene/butene copolymer, ethylene/hexene copolymer, or ethylene/methacrylate copolymer may be used singly as the separator or a stack of the porous polymer films may be used as the separator. As another example, a typical porous non-woven fabric, for example, a non-woven fabric made of high-melting point fiberglass, polyethylene terephthalate fiber, or the like may be used as the separator.

At least one surface of the separator may include a coating layer containing inorganic particles. In addition, the separator itself may be a coating layer containing inorganic particles. The particles constituting the coating layer may be coupled by a binder so that an interstitial volume is present between the adjacent particles.

The inorganic particles may be made of inorganic substance with permittivity of 5 or more. As a non-restrictive example, the inorganic particle may include one or more materials selected from a group consisting of $Pb(Zr,Ti)O_3(PZT)$, $Pb_{1-x}La_xZr_{1-y}Ti_yO_3(PLZT)$, $PB(Mg_3Nb_{2/3})O_3$-$PbTiO_3(PMN$-$PT)$, $BaTiO_3$, hafnia($HfO_2$), $SrTiO_3$, $TiO_2$, $Al_2O_3$, $ZrO_2$, $SnO_2$, $CeO_2$, MgO, CaO, ZnO, and $Y_2O_3$.

The electrolyte may be a salt having a structure such as $A^+B^-$. In this case, $A^+$ includes ions including alkaline metal cations such as $Li^+$, $Na^+$, and $K^+$, or a combination thereof. Further, $B^-$ includes one or more anions selected from a group consisting of $F^-$, $Cl^-$, $Br^-$, $I^-$, $NO3^-$, $N(CN)^{2-}$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)7SO_3^-$, $CF_3CO_2^-$, $CH_3CO_2^-$, SCN-, and $(CF_3CF_2SO_2)_2N^-$.

In addition, the electrolyte may be dissolved in an organic solvent and used. Propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof may be used as the organic solvent.

Referring to FIGS. 5 and 6, the battery can 20 is an approximately cylindrical receptacle having an opening portion formed at a lower end thereof. For example, the battery can 20 is made of a material such as metal having conductivity. For example, a material of the battery can 20 may be aluminum. A bottom portion of the battery can 20, where the opening portion is provided, will be referred to as an opened end. A lateral surface (outer peripheral surface) of the battery can 20 may be integrated with an upper surface of the battery can 20. The upper surface (surface parallel to the X-Y plane) of the battery can 20 has an approximately flat shape. The upper surface positioned opposite to the opened end will be referred to as a closed end. The battery can 20 accommodates the electrode assembly 10 and an electrolyte through the opening portion formed at the lower side thereof.

The battery can 20 is electrically connected to the electrode assembly 10. The battery can 20 may be electrically connected to one of the first electrode 11 and the second electrode 12. For example, the battery can may be electrically connected to the second electrode 12 of the electrode assembly 10. In this case, the battery can 20 may have the same polarity as the second electrode 12.

Referring to FIG. 6, the battery can 20 may have a beading portion 21 and a crimping portion 22 formed at a lower end thereof. The beading portion 21 is positioned at a lower side of the electrode assembly 10. The beading portion 21 is formed by pressing a periphery of an outer peripheral surface of the battery can 20. The beading portion 21 prevents the electrode assembly 10, which has a size approximately corresponding to a width of the battery can 20, from being withdrawn through the opening portion formed at the lower end of the battery can 20. The beading portion 21 may serve as a support portion on which the sealing body 30 is seated.

The crimping portion 22 is formed at a lower side of the beading portion 21. The crimping portion 22 has a shape extending and bent to surround a part of an outer peripheral surface of the sealing body 30 disposed at a lower side of the beading portion 21 and surround a part of a lower surface of the sealing body 30.

However, the present invention does not exclude a case in which the battery can 20 does not have the beading portion 21 and/or the crimping portion 22. That is, in the present invention, in case that the battery can 20 does not have the beading portion 21 and/or the crimping portion 22, the electrode assembly 10 may be fixed and/or the battery can 20 may be sealed by a component additionally applied and configured to serve as a stopper for the electrode assembly 10, for example. In addition, if the secondary battery 1 of the present invention includes the sealing body 30, the electrode assembly 10 may be fixed and/or the battery can 20 may be sealed by an additionally applied structure, on which the sealing body 30 may be seated, and/or by welding between the battery can 20 and the sealing body 30, for example. That is, the sealing body may seal the opened end of the battery can.

Referring to FIG. 6, the sealing body 30 may be made of a metallic material to ensure rigidity, for example. The sealing body 30 may cover the opened end formed at the lower end of the battery can 20. That is, the sealing body 30 defines a lower surface of the secondary battery 1.

In the secondary battery 1 of the present invention, the sealing body 30 does not have a polarity even though the sealing body 30 is made of a metallic material having conductivity. The configuration in which the sealing body 30 does not have a polarity may mean that the sealing body 30 is electrically insulated from the battery can 20 and the electrode terminal 40.

Therefore, the sealing body 30 does not serve as the electrode terminal 40, i.e., a positive electrode terminal or a negative electrode terminal. Therefore, the sealing body 30 need not be electrically connected to the electrode assembly 10 and the battery can 20, and the material of the sealing body 30 need not necessarily be conductive metal.

In case that the battery can 20 of the present invention has a beading portion 21, the sealing body 30 may be seated on the beading portion 21 formed on the battery can 20. In addition, in case that the battery can 20 of the present invention has the crimping portion 22, the sealing body 30 may be fixed by the crimping portion 22. A sealing gasket 90 may be interposed between the sealing body 30 and the crimping portion 22 of the battery can 20 to ensure sealability of the battery can 20. Meanwhile, as described above, the battery can 20 of the present invention may not have the beading portion 21 and/or the crimping portion 22. In this case, the sealing gasket 90 may be interposed between the sealing body 30 and a fixing structure provided at the opening portion of the battery can 20 to ensure sealability of the battery can 20.

Referring to FIGS. 5 and 6, the electrode terminal 40 may be electrically connected to the other of the first electrode 11 and the second electrode 12. That is, the electrode terminal 40 may have the opposite polarity to the battery can 20. For example, the electrode terminal 40 may be electrically connected to the first electrode 11 of the electrode assembly 10. Further, a surface of the electrode terminal 40 may be exposed to the outside.

The electrode terminal 40 may be made of a metallic material having conductivity. For example, the electrode terminal 40 may penetrate an approximately central portion of the closed end formed at the upper end of the battery can 20. A part of the electrode terminal 40 may be exposed to an upper side of the battery can 20, and the remaining part of the electrode terminal 40 may be positioned in the battery can 20. For example, the electrode terminal 40 may be fixed onto an inner surface of the closed end of the battery can 20 by riveting. The electrode terminal 40 may penetrate the insulation member 60 and be coupled to the non-coated portion 11a provided on the first electrode 11 or the first current collecting plate 50. In this case, the electrode terminal 40 may have a first polarity.

Therefore, the electrode terminal 40 may serve as a first electrode terminal in the secondary battery 1 of the present invention. In case that the electrode terminal 40 has the first polarity as described above, the electrode terminal 40 is electrically insulated from the battery can 20 having a second polarity. The electrical insulation between the electrode terminal 40 and the battery can 20 may be implemented in various ways.

For example, the insulation tape is provided to cover at least a part of the non-coated portion 11a provided on the first electrode 11 or the first current collecting plate 50, which makes it possible to prevent the electrical contact with the battery can. The notching pattern of the insulation tape prevents the separation at the end of the electrode assembly, which makes it possible to prevent a defect of the electrical connection between the non-coated portion 11a and the electrode terminal 40 provided on the first current collecting plate 50 or the first electrode 11.

The tab structure of the electrode included in the electrode assembly is formed as the non-coated portion by preventing the separation at the end of the electrode assembly as described above, which makes it possible to increase electric current to be applied to the battery. Therefore, the size of the battery may be increased, the high-energy density may be implemented, and the costs may be reduced.

As another example, the insulation may be implemented by interposing the gasket 70, which will be described below, between the electrode terminal 40 and the battery can 20. On the contrary, the insulation may be implemented by forming an insulating coating layer on a part of the electrode terminal 40. Alternatively, the electrode terminal 40 may be structurally securely fixed so that the electrode terminal 40 and the battery can 20 cannot come into contact with each other. Alternatively, a plurality of methods, among the above-mentioned methods, may be applied.

Referring to FIG. 6, the first current collecting plate 50 may be coupled to the upper portion of the electrode assembly 10. For example, the first current collecting plate 50 may be coupled to the non-coated portion 11a provided on the first electrode 11 on the upper portion of the electrode assembly 10. The first current collecting plate 50 may be made of a metallic material having conductivity. Although not illustrated in the drawings, the first current collecting plate 50 may have a plurality of concave-convex portions radially formed on a lower surface of the first current collecting plate 50.

In case that the concave-convex portions are formed, the first current collecting plate 50 may be pushed to press the concave-convex portions into the non-coated portion 11a provided on the first electrode 11.

The secondary battery 1 according to another embodiment of the present invention may not include the first current collecting plate 50. In this case, the non-coated portion 11a provided on the first electrode 11 may be electrically connected directly to the electrode terminal 40.

Referring to FIG. 6, the first current collecting plate 50 may be coupled to the end of the non-coated portion 11a provided on the first electrode 11. For example, the non-coated portion 11a provided on the first electrode 11 and the first current collecting plate 50 may be coupled to each other by laser welding. The laser welding may be performed by partially melting a base material of the first current collecting plate 50. Alternatively, the laser welding may be performed in a state in which welding solder is interposed between the first current collecting plate 50 and the non-coated portion 11a. In this case, the solder may have a lower melting point than the first current collecting plate 50 and the non-coated portion 11a. Meanwhile, resistance welding, ultrasonic welding, and the like may be applied in addition to the laser welding, but the welding method is not limited thereto.

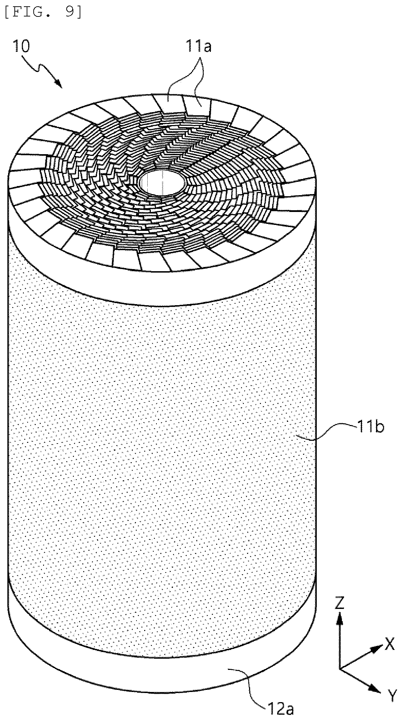

FIG. 9 is a view illustrating a schematic configuration of an electrode assembly according to another embodiment of the present invention.

Referring to FIG. 9, the first current collecting plate 50 may be coupled to a coupling surface formed by bending the end of the non-coated portion 11a, which is provided on the first electrode 11, in the direction parallel to the first current collecting plate 50. For example, the bending direction of the non-coated portion 11a may be a direction toward the winding center C of the electrode assembly 10. In case that the non-coated portion 11a is bent as described above, a space occupied by the non-coated portion 11a is decreased, which makes it possible to improve energy density. In addition, a coupling area between the non-coated portion 11a and the first current collecting plate 50 increases, which makes it possible to increase a coupling force and reduce resistance.

Referring to FIGS. 6 and 7, the insulation member 60 may be provided between an upper end of the electrode assembly 10 and an inner surface of the battery can 20, between the inner surface of the battery can 20 and the first current collecting plate 50 coupled to the upper portion of the electrode assembly 10, or between the inner surface of the battery can 20 and the insulation tape 100 provided on the upper portion of the electrode assembly 10. The insulation member 60 prevents the contact between the battery can 20 and the non-coated portion 11a provided on the first electrode 11, the contact between the first current collecting plate 50 and the battery can 20, and/or the contact between the insulation tape 100 and the battery can 20. That is, the insulation member 60 is accommodated in the battery can 20 and configured to block the electrical connection between the battery can 20 and the non-coated portion 11a provided on the first electrode 11. Therefore, the insulation member 60 may be made of a material having insulation performance. For example, the insulation member 60 may include a polymer material. The insulation member 60 may include a 'ㄷ'-shaped insulation member or a '-'-shaped insulation member.

Referring to FIGS. 5 and 6, the gasket 70 is interposed between the battery can 20 and the electrode terminal 40 and prevents the battery can 20 and the electrode terminal 40, which have the opposite polarities, from coming into contact with each other. That is, the gasket 70 blocks the electrical connection between the battery can 20 and the electrode terminal 40. Therefore, the upper surface of the battery can 20, which has an approximately flat shape, may serve as a terminal of the second electrode 12 of the secondary battery 1.

Referring to FIGS. 6 and 7, the second current collecting plate 80 may be coupled to a lower portion of the electrode assembly 10. The second current collecting plate 80 may be made of a metallic material having conductivity. The second current collecting plate 80 may be connected to the non-coated portion 12a provided on the second electrode 12. In addition, the second current collecting plate 80 may be electrically connected to the battery can 20. As illustrated in FIG. 2, the second current collecting plate 80 may be interposed and fixed between the inner surface of the battery can 20 and the sealing gasket 90. On the contrary, the second current collecting plate 80 may be welded to an inner wall surface of the battery can 20.

Although not illustrated in the drawings, the second current collecting plate 80 may have a plurality of concave-convex portions radially formed on one surface of the second current collecting plate 80. In case that the concave-convex portions are formed, the second current collecting plate 80 may be pushed to press the concave-convex portions into the non-coated portion 12a provided on the second electrode 12.

Referring to FIGS. 6 and 8, the second current collecting plate 80 may be coupled to the end of the non-coated portion 12a provided on the second electrode 12. For example, the non-coated portion 12a provided on the second electrode 12 and the second current collecting plate 80 may be coupled to each other by laser welding. The laser welding may be performed by partially melting a base material of the second current collecting plate 80. Alternatively, the laser welding may be performed in a state in which welding solder is interposed between the second current collecting plate 80 and the non-coated portion 12a. In this case, the solder may have a lower melting point than the second current collecting plate 80 and the non-coated portion 12a. Meanwhile, resistance welding, ultrasonic welding, and the like may be applied in addition to the laser welding, but the welding method is not limited thereto.

Although not illustrated in the drawings, the second current collecting plate 80 may be coupled to a coupling surface formed by bending the end of the non-coated portion 12a, which is provided on the second electrode 12, in the direction parallel to the second current collecting plate 80. For example, the bending direction of the non-coated portion 12a provided on the second electrode 12 may be a direction toward the winding center C of the electrode assembly 10. In case that the non-coated portion 12a provided on the second electrode 12 is bent as described above, a space occupied by the non-coated portion 12a is decreased, which makes it possible to improve energy density. In addition, a coupling area between the non-coated portion 12a and the second current collecting plate 80 increases, which makes it possible to increase a coupling force and reduce resistance.

Because the electrode assembly 10 according to the embodiment in FIG. 9 is similar to the electrode assembly 10 of the embodiment in FIG. 8, a repeated description of the components substantially identical or similar to the components in the previous embodiment will be omitted. Hereinafter, the description will be focused on a difference from the previous embodiment.

Referring to FIG. 9, the electrode assembly 10 according to another embodiment of the present invention may have a structure in which the non-coated portions 11a and 12a are at least partially bent toward a core. For example, referring to FIG. 9, at least some sections of the non-coated portions 11a and 12a may be divided into a plurality of segmental pieces. In this case, the plurality of segmental pieces may be structured to overlap one another in multiple layers while being bent toward the core. For example, the plurality of segmental pieces may be notched by a laser. The segmental piece may be formed by a publicly-known metal foil cutting process such as ultrasonic cutting or blanking.

According to the embodiment, an area of the first or second electrode 11 or 12, which is exposed to the end of the electrode assembly, or an area of each of the non-coated portions 11a and 12a of the electrode may be made by subtracting an area of a mandrel part from an overall area of the end of the electrode assembly.

A predetermined gap may be provided between the active material layer and a lower end of a cutting line between the segmental pieces in order to prevent damage to the active material layer and/or the insulation layer when the bending processing is performed on the non-coated portions 11a and 12a. This is because stress is concentrated on a portion in the vicinity of the lower end of the cutting line when the non-coated portions 11a and 12a are bent. The gap may be 0.2 to 4 mm. When the gap is adjusted to the corresponding numerical value, it is possible to prevent damage to the active material layer in the vicinity of the lower end of the cutting line by stress that occurs when the bending processing is performed on the non-coated portions 11a and 12a. In addition, the gap may prevent damage to the active material layer caused by tolerance at the time of notching or cutting the segmental piece.

For example, the bending directions of the non-coated portions 11a and 12a may be the directions toward the winding center C of the electrode assembly 10. In case that the non-coated portions 11a and 12a are bent as described above, the spaces occupied by the non-coated portions 11a and 12a are decreased, which makes it possible to improve energy density. In addition, the coupling areas between the non-coated portions 11a and 12a and the current collecting plates 50 and 80 increase, which makes it possible to increase a coupling force and reduce resistance. Therefore, it is possible to increase electric current applied to the battery. Therefore, the size of the battery may be increased, the high-energy density may be implemented, and the costs may be reduced.

According to the embodiment of the present invention, the secondary battery is a cylindrical secondary battery. For example, the secondary battery may include the battery can that accommodates the jelly roll. The battery can may have a cylindrical shape. A diameter of a circle of each of the two opposite ends of the battery can may be 30 mm to 55 mm, and a height of the battery can may be 60 mm to 120 mm. For example, a value of circular diameter x height of the cylindrical battery can may be 40 mm x 60 mm, 40 mm x 80 mm, 40 mm x 90 mm, or 40 mm x 120 mm. The secondary battery may be a battery cell.

In particular, for example, the cylindrical battery cell may be a cylindrical battery cell having a ratio of a form factor larger than about 0.4 (a ratio of the form factor is defined as a value made by dividing a diameter of the cylindrical battery cell by a height of the cylindrical battery cell, i.e., a ratio of a diameter $\Phi$ to a height H).

In this case, the form factor means a value indicating the diameter and the height of the cylindrical battery cell. For example, the cylindrical battery cell according to the embodiment of the present invention may be 46110 cell, 48750 cell, 48110 cell, 48800 cell, 46800 cell, and 46900 cell. In the numerical value indicating the form factor, the first two numbers indicate a diameter of the cell, the next two numbers indicate a height of the cell, and the final number 0 indicates that a cross-section of the cell is circular.

The battery cell according to the embodiment of the present invention is an approximately cylindrical cell, and the battery cell may have a diameter of about 46 mm, a height of about 110 mm, and a ratio of the form factor of 0.418.

The battery cell according to another embodiment of the present invention is an approximately cylindrical cell, and the battery cell may have a diameter of about 48 mm, a height of about 75 mm, and a ratio of the form factor of 0.640.

The battery cell according to still another embodiment of the present invention is an approximately cylindrical cell, and the battery cell may have a diameter of about 48 mm, a height of about 110 mm, and a ratio of the form factor of 0.418.

The battery cell according to yet another embodiment of the present invention is an approximately cylindrical cell, and the battery cell may have a diameter of about 48 mm, a height of about 80 mm, and a ratio of the form factor of 0.600.

The battery cell according to still yet another embodiment of the present invention is an approximately cylindrical cell, and the battery cell may have a diameter of about 46 mm, a height of about 80 mm, and a ratio of the form factor of 0.575.

The battery cell according to another further embodiment of the present invention is an approximately cylindrical cell, and the battery cell may have a diameter of about 46 mm, a height of about 90 mm, and a ratio of the form factor of 0.511.

In the related art, battery cells having the ratio of the form factor of approximately 0.4 or less are used. That is, in the related art, 18650 cell, 21700 cell, and the like are used, for example. In the case of 18650 cell, a diameter thereof is about 18 mm, a height thereof is about 65 mm, and a ratio of the form factor thereof is 0.277. In the case of 21700 cell, a diameter thereof is about 21 mm, a height thereof is about 70 mm, and a ratio of the form factor thereof is 0.300.

Still yet another embodiment of the present invention provides a battery module and a battery pack that include the secondary battery according to the above-mentioned embodiment.

The secondary battery according to the above-mentioned embodiment may be used to manufacture the battery pack.

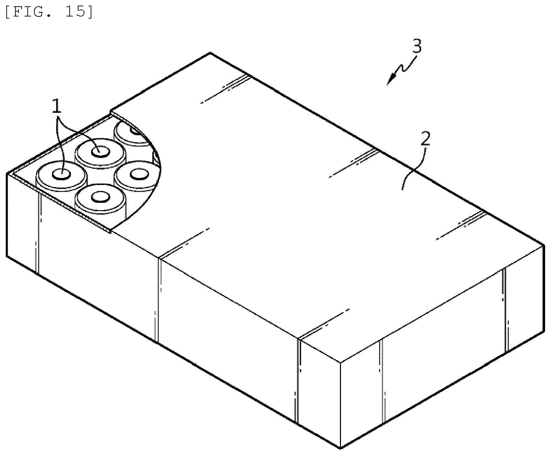

FIG. 15 is a view illustrating a schematic configuration of a battery pack including the secondary battery in FIG. 6.

Referring to FIG. 15, a battery pack 3 according to an embodiment of the present invention includes an assembly to which the secondary battery 1 is electrically connected, and a pack housing 2 configured to accommodate the assembly. The secondary battery 1 is the battery cell according to the above-mentioned embodiment. For convenience of illustration, components such as busbars for electrical connection between the cylindrical secondary batteries 1, a cooling unit, and an external terminal are omitted from the drawings.

Another further embodiment of the present invention provides a vehicle including the battery pack according to the above-mentioned embodiment. The battery pack 3 may be mounted on a vehicle. For example, the vehicle may be an electric vehicle, a hybrid vehicle, or a plug-in hybrid vehicle. The vehicle may be a four-wheel vehicle or a two-wheel vehicle.

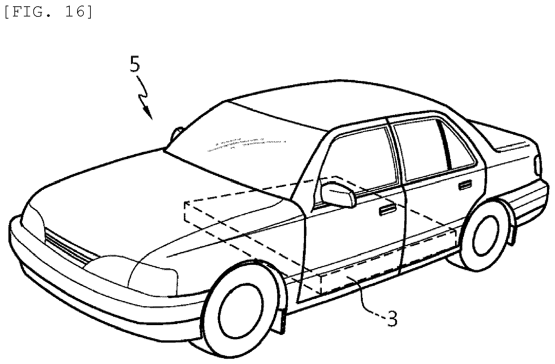

FIG. 16 is a view illustrating a schematic configuration of a vehicle including the battery pack in FIG. 15.

Referring to FIG. 16, a vehicle 5 according to an embodiment of the present invention includes the battery pack 3 according to the embodiment of the present invention. The vehicle 5 operates by receiving electric power from the battery pack 3 according to the embodiment of the present invention.

The present invention has been described with reference to the limited embodiments and the drawings, but the present invention is not limited thereto. The described embodiments may be changed or modified by those skilled in the art to which the present invention pertains within the technical spirit of the present invention and within the scope equivalent to the appended claims.

Examples

Example 1

(1) Preparation of jelly roll

An electrode assembly was manufactured by sequentially stacking and winding a negative electrode (a negative electrode current collector: Cu foil, and a negative electrode active material: 50 parts by weight of artificial graphite and 50 parts by weight of natural graphite), a sheet-shaped polyethylene separator, a positive electrode (positive electrode current collector: Al foil, and an active material: LiCoO2), and the polyethylene separator. A diameter of the end of the electrode assembly perpendicular to the winding axis was 45 mm.

An insulation tape made of a polyimide material and having a notching pattern (a notching pattern shape: trapezoidal, and a flag shape: triangular) was attached to the lateral surface of the electrode assembly and the end of the electrode assembly to cover the exposed positive electrode non-coated portion. The insulation tape, which had a notching pattern, a length of 7 mm, and a thickness of 17.5 um (a base layer: 12.5 um, and an adhesive layer: 5 μm), and included the portions for covering the lateral surface of the electrode assembly and the end of the electrode assembly, was used.

The parts of the insulation tape did not overlap one another in the region that covered the end of the electrode assembly. An area of the insulation tape, which covered the end of the electrode assembly, was calculated on the basis of Experimental Example 1 to be described below. The insulation tape covered about 26. 7% of the positive electrode non-coated portion of end of the electrode assembly.

A jelly roll was manufactured to include an insulation member (a '⌐'-shaped insulation member) disposed at the end of the electrode assembly to which the insulation tape was attached, and the insulation member covered a part of the lateral surface and the end of the electrode assembly.

(2) Preparation of secondary battery

A secondary battery was manufactured by inserting the manufactured jelly roll into a battery can (a diameter: 45 mm to 47 mm, and a material: steel) having an opening portion at one side thereof, injecting an electrolyte, which is made by mixing ethylene carbonate (EC) and ethyl methyl carbonate (EMC) at a volume ratio of 30:70 and dissolving the mixture so that molarity of LiPF6 is 1.0 M, and then sealing the cylindrical battery can with a sealing body.

A riveting structure of the electrode terminal was manufactured by riveting an electrode terminal through a through-hole formed in a bottom of the battery can, and providing a gasket between the electrode terminal and an outer diameter portion of the through-hole. In the secondary battery including the riveting structure, the battery can and the negative electrode of the jelly roll were electrically connected to each other, the positive electrode and the electrode terminal were electrically connected to each other, and the sealing body was insulated from the battery can.

Example 2

A jelly roll and a secondary battery were manufactured by the same method as those in Example 1, except that an insulation tape having a notching pattern and a thickness of 22.5 um (a base layer: 12.5 um, and an adhesive layer: 10 $\mu$m) was attached.

Comparative Example 1

A jelly roll and a secondary battery were manufactured by the same method as those in Example 1, except that an insulation tape having no notching pattern and a thickness of 30 um (a base layer: 25 um, and an adhesive layer: 5 $\mu$m) was attached to cover at least a part of the end of the electrode assembly and the lateral surface of the electrode assembly.

Comparative Example 2

A jelly roll and a secondary battery were manufactured by the same method as those in Comparative Example 1, except that an insulation tape having no notching pattern and a thickness of 17.5 $\mu$m (a base layer: 12.5 um, and an adhesive layer: 5 $\mu$m) was attached.

Comparative Example 3

A jelly roll and a secondary battery were manufactured by the same method as those in Comparative Example 1, except that an insulation tape having no notching pattern and a thickness of 22.5 um (a base layer: 12.5 um, and an adhesive layer: 10 $\mu$m) was attached.

Experimental Examples

Experimental Example 1 The area of the insulation tape that covers the end of the electrode assembly.

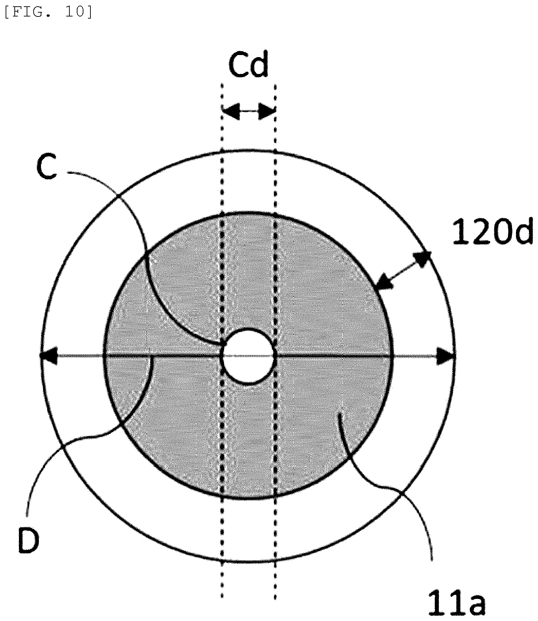

FIG. 10 is a view illustrating the end of the electrode assembly to calculate the area of the insulation tape that covers the end of the electrode assembly.
Referring to FIG. 10, the area of the insulation tape, which covers the first or second electrode or the non-coated portion 11a of the electrode exposed to the end of the electrode assembly, was calculated as follows. In this case, a diameter D of the end perpendicular to the winding axis of the electrode assembly, a length 120d of a portion of the insulation tape that covers the end of the electrode assembly, and a diameter Cd of the mandrel part are as follows.

- Diameter of end perpendicular to winding axis of electrode assembly: D (mm)
- Length of portion of insulation tape that covers end of electrode assembly: 120d (mm)

- Diameter of mandrel part: Cd (mm)

① Overall area of first or second electrode or non-coated portion exposed to end of electrode assembly (except for mandrel part)

$$= \{(D/2)^2 - (Cd/2)^2\} * \pi$$

② Area of portion of insulation tape that covers end of electrode assembly

$$= \{(D/2)^2 - (D/2-120d)^2\} * \pi * \text{ratio of area of}$$

notching pattern (area of notching pattern to overall area of tape) 20 to 80%

③ Area of insulation tape that covers first or second electrode or non-coated portion of electrode exposed to end of electrode assembly

$$= (②\ /\ ①) * 100 = 5 \text{ to } 60\%$$

In the insulation tape in Example 1 and 2 that has the notching pattern, the area, which covers the end of the electrode assembly, was calculated as follows.

- Diameter of end perpendicular to winding axis of electrode assembly: 45 mm
- Length of portion of insulation tape that covers end of electrode assembly: 7 mm
- Diameter of mandrel part: 6 mm

① Overall area of first or second electrode or non-coated portion exposed to end of electrode assembly (except for mandrel part) $= (22.5^2 - 3^2) * \pi = 1561.4$

② Area of portion of insulation tape that covers end
of electrode assembly = (22.5² - 15.5²) * π * 50% = 835.2 *
0.5 = 417.6


③ Area of insulation tape that covers first or
second electrode or non-coated portion of electrode exposed
to end of electrode assembly = (417.6 / 1561.4) * 100 =
26.7%

Experimental Example 2

Improvement on adhesive force and separation depending on thickness of insulation tape

A bonding layer of the insulation tape was compressed on a SUS304 substrate by reciprocating a rubber roller of 2 kg once, the bonding layer was left unattended for 20 minutes at 23°C, and then the adhesive force of the insulation tape was measured by using a texture analyzer (Stable Micro Systems) at a separation speed of 300 mm/min at an angle of 180° on a backplate film from colored polyimide.

Regarding the identification of a degree of separation and separation of the jelly roll, a height of the insulation tape, which is separated from the end of the electrode assembly, was measured. In Table 1 below, o indicates a case in which the height of the insulation tape separated from the end of the electrode assembly of the jelly roll is 2 mm or more, △ indicates a case in which the height of the insulation tape separated from the end of the electrode assembly of the jelly roll is 1 mm to 2 mm, and X indicates a case in which the height of the insulation tape separated from the end of the electrode assembly of the jelly roll is 1 mm or less.

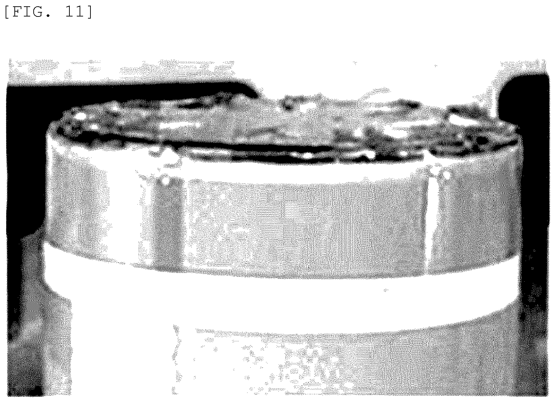

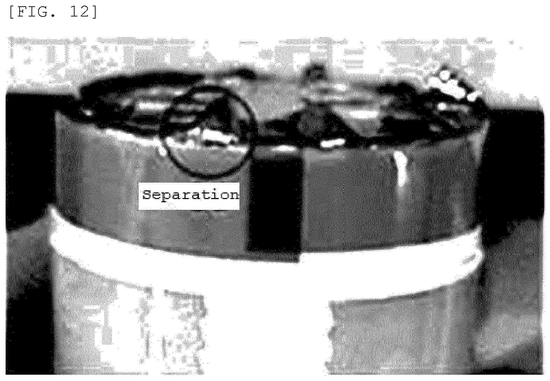

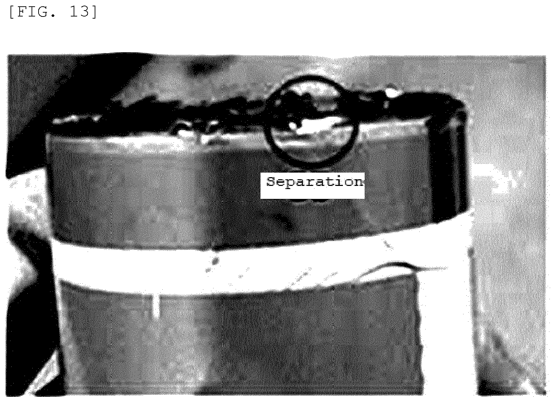

The identification of the separation in Example 1 is illustrated in FIG. 11, the identification of the separation in Comparative Example 1 is illustrated in FIG. 12, and the identification of the separation in Comparative Example 3 is illustrated in FIG. 13. The identification of the separation in Example 2 may be as illustrated in FIG. 11 because a degree of separation is not recognized with the naked eye in comparison with that in Example 1. The identification of the separation in Comparative Example 2 may be as illustrated in FIG. 12 because a degree of separation is not recognized with the naked eye in comparison with that in Comparative Example 1.

[Table 1]

| Classification | Comparative Example 1 | Comparative Example 2 | Comparative Example 3 | Example 1 | Example 2 |
|---|---|---|---|---|---|
| Tape notching | X | X | X | ○ | ○ |
| Thickness of base layer ($\mu$m) | 25 | 12.5 | 12.5 | 12.5 | 12.5 |
| Thickness of adhesive layer ($\mu$m) | 5 | 5 | 10 | 5 | 10 |
| Adhesive force (gf/25 mm) (Avg.) | 479 | 457 | 703 | 457 | 703 |
| Degree of separation (mm) | 2.5 to 3.0 | 2 | 1.0 to 1.5 | 1 or less | 1 or less |
| Separation identification | ○ | ○ | △ | X | X |

Referring to Table 1 and FIGS. 11 to 13, Examples 1 and 2 include the insulation tape having the notching pattern according to the present invention. It can be ascertained that the amount of separation is small at the end of the electrode assembly of the jelly roll in comparison with Comparative Examples 1 to 3 that include the insulation tape having no notching pattern. Therefore, Examples 1 and 2 may prevent the separation at the end of the electrode assembly, which makes it possible to prevent a defect of the electrical connection between the electrode tab part and the electrode terminal part, in comparison with Comparative Examples 1 to 3.

Examples 1 and 2 are different from each other in terms of a thickness of the insulation tape, particularly, a thickness of the adhesive layer. It can be ascertained that the thickness of the adhesive layer in Example 2 is larger than twice the thickness of the adhesive layer in Example 1, and the adhesive layer in Example 2 has a high adhesive force and causes a small amount of separation at the end of the electrode assembly.

Comparative Examples 1 and 2 are different from each other in terms of a thickness of the insulation tape, particularly, a thickness of a base layer. It can be ascertained that the thickness of the base layer in Comparative Example 2 is 1/2 times the thickness of the base layer in Comparative Example 1, and the degree of separation is improved even though the adhesive force is low. Therefore, it can be ascertained that the use of the insulation tape, in which the thickness of the adhesive layer is larger than the thickness of the base layer, improves the degree of separation.

Example 1 and Comparative Example 2 are different and Example 2 and Comparative Example 3 are different only in terms of whether the notching is present even though the thicknesses of the base layer and the adhesive layer of the insulation tape are equal to each other. It can be ascertained that the separation at the end of the electrode assembly is improved in Examples 1 and 2 having the notching in comparison with Comparative Examples 2 and 3 even though the thicknesses of the base layer and the adhesive layer of the insulation tape are equal to each other. Therefore, it is possible to prevent a defect of the electrical connection between the electrode tab part and the electrode terminal part.

Therefore, it can be ascertained that the insulation tape having the notching pattern may be further properly attached to the end of the electrode assembly. Specifically, the insulation tape is advantageous when the thickness of the base layer of the insulation tape is small. The insulation tape is more appropriately attached to the end of the electrode assembly as the thickness of the adhesive layer of the insulation tape increases.

In particular, it can be ascertained that the thickness of the base layer of the insulation tape is decreased by about 50% and the thickness of the adhesive layer is increased by about 150% in Example 1 in comparison with Comparative Example 1. That is, it can be ascertained that in Example 1, the thickness of the base layer of the insulation tape is decreased, and the thickness of the adhesive layer of the insulation tape is increased, such that the insulation tape is advantageously attached to the end of the electrode assembly.


Experimental Example 3


Measurement of AC resistance

The AC resistance of the secondary battery was measured by using a battery tester (battery tester BT3554-51 of HIOKI) under a room temperature condition. The measurement was performed by bringing two leads of the battery tester into contact with the positive electrode terminal part (riveted electrode terminal) and the negative electrode terminal part (battery can).

The measurement of the AC resistance of the secondary battery is performed to measure internal resistance by using an alternating current method, i.e., a method that measures resistance of the battery by applying a micro-alternating current signal to the battery. It is possible to indirectly identify a defect of the electrical connection between the electrode tab part and the electrode terminal part by measuring the AC resistance.

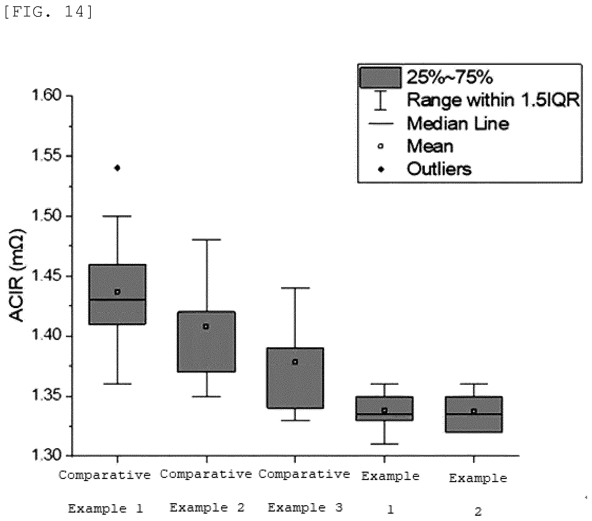

The measurement of the AC resistance was performed on the secondary batteries according to Examples 1 and 2 and Comparative Examples 1 to 3 ten times, respectively, and average values thereof were obtained. The results are shown in Table 2 and FIG. 14.

[Table 2]

| Classification | Comparative Example 1 | Comparative Example 2 | Comparative Example 3 | Example 1 | Example 2 |
|---|---|---|---|---|---|
| Once | 1.41 | 1.42 | 1.39 | 1.33 | 1.32 |
| Twice | 1.36 | 1.42 | 1.39 | 1.34 | 1.35 |
| Three times | 1.42 | 1.35 | 1.33 | 1.35 | 1.33 |
| Four times | 1.54 | 1.42 | 1.39 | 1.33 | 1.35 |
| Five times | 1.39 | 1.37 | 1.34 | 1.31 | 1.32 |

(continued)

| Classification | Comparative Example 1 | Comparative Example 2 | Comparative Example 3 | Example 1 | Example 2 |
|---|---|---|---|---|---|
| Six times | 1.46 | 1.36 | 1.34 | 1.33 | 1.32 |
| Seven times | 1.44 | 1.46 | 1.42 | 1.36 | 1.35 |
| Eight times | 1.5 | 1.48 | 1.44 | 1.32 | 1.33 |
| Nine times | 1.44 | 1.42 | 1.39 | 1.36 | 1.36 |
| Ten times | 1.41 | 1.38 | 1.35 | 1.35 | 1.34 |
| Average | 1.437 | 1.408 | 1.378 | 1.338 | 1.337 |
| Standard deviation | 0.053 | 0.043 | 0.037 | 0.017 | 0.015 |

Referring to Table 2 and FIG. 14, Example 1 includes the insulation tape according to the present invention that has the notching pattern and the comparatively small thickness. It can be ascertained that Example 1 has a lower AC resistance value than Comparative Example 1 including the insulation tape having a comparatively large thickness without having a notching pattern.

Comparative Examples 1 and 2 are different from each other in terms of a thickness of the insulation tape, particularly, a thickness of a base layer. It can be ascertained that the thickness of the base layer in Comparative Example 2 is 1/2 times the thickness of the base layer in Comparative Example 1, and the AC resistance is improved even though the adhesive force is low. Therefore, it can be ascertained that the use of the insulation tape, in which the thickness of the adhesive layer is larger than the thickness of the base layer, improves the AC resistance.

In addition, because Comparative Examples 2 and 3 include the insulation tape having no notching pattern even though the thicknesses of the base layer and the adhesive layer of the insulation tape are equal to each other in Comparative Examples 2 and 3 and Examples 1 and 2, it can be ascertained that the AC resistance value is higher in Comparative Examples 2 and 3 than in Examples 1 and 2.

Therefore, the notching pattern of the insulation tape may minimize the region in which the portions of the insulation tape overlap one another at the end of the electrode assembly, and prevent the separation at the end of the electrode assembly, which makes it possible to prevent a defect of the electrical connection between the electrode tab part and the electrode terminal part. It can be ascertained that the insulation tape, which has a large thickness, particularly, a large thickness of the adhesive layer, is advantageously attached to the end of the electrode assembly.

**Claims**

1.   A jelly roll comprising:

an electrode assembly made by winding a stack of a first electrode, a separator, and a second electrode; and
an insulation tape configured to cover at least a part of a lateral surface of the electrode assembly and at least a part of an end of the electrode assembly,
wherein the insulation tape has at least one notching pattern provided in a region that covers at least a part of the end of the electrode assembly.

2.   The jelly roll of claim 1, wherein an area in which portions of the insulation tape overlap one another is 10% or less of an overall area that covers the end of the electrode assembly.

3.   The jelly roll of claim 1, wherein portions of the insulation tape do not overlap one another in the region of the insulation tape that covers the end of the electrode assembly.

4.   The jelly roll of claim 1, wherein the insulation tape has two or more notching patterns, and a flag shape between the two adjacent notching patterns is at least one of a trapezoidal shape, a quadrangular shape, a parallelogrammatic shape, a triangular shape, and a semicircular shape.

5.   The jelly roll of claim 1, wherein a shape of the notching pattern of the insulation tape is at least one of a trapezoidal shape, a quadrangular shape, a parallelogrammatic shape, a triangular shape, and a semicircular shape.

6. The jelly roll of claim 1, wherein at least one of the first and second electrodes comprises a current collector and an electrode active material layer provided on the current collector, the current collector comprises a non-coated portion on which no electrode active material layer is provided, at least a part of the non-coated portion is exposed to the lateral surface of the electrode assembly, and the insulation tape is provided to cover the non-coated portion on the lateral surface of the electrode assembly.

7. The jelly roll of claim 1, wherein the insulation tape is provided to cover 5% to 60% of the first or second electrode exposed to the end of the electrode assembly.

8. The jelly roll of claim 6, wherein at least a part of the non-coated portion is exposed to the end of the electrode assembly, and the insulation tape is provided to cover 5% to 60% of the non-coated portion at the end of the electrode assembly.

9. The jelly roll of claim 1, wherein a thickness of the insulation tape is 10 um to 100 um.

10. The jelly roll of claim 1, wherein the insulation tape comprises a base layer and an adhesive layer, a thickness of the base layer is 3 um to 25 um, and a thickness of the adhesive layer is 2 um to 20 um.

11. The jelly roll of claim 1, wherein the insulation tape includes one or more materials selected from a group consisting of polyimide, polyethylene, polypropylene, polytetrafluoroethylene, polyethylene terephthalate, and polybutylene terephthalate.

12. The jelly roll of claim 1, further comprising:

   a current collecting plate provided at the end of the electrode assembly,
   wherein the current collecting plate is positioned between the insulation tape and the electrode assembly or positioned at an end opposite to the side of the electrode assembly facing the insulation tape in the region in which the insulation tape covers the end of the electrode assembly.

13. The jelly roll of claim 1, further comprising:
   an insulation member provided at the end of the electrode assembly and configured to cover the end of the electrode assembly or cover at least a part of the end of the electrode assembly and at least a part of the lateral surface of the electrode assembly.

14. An insulation tape, which is attached to cover at least a part of a lateral surface of an electrode assembly, which has a structure made by winding a stack of a first electrode, a separator, and a second electrode, and cover at least a part of an end of the electrode assembly, the insulation tape comprising at least one notching pattern on at least one edge portion thereof.

15. The insulation tape of claim 14, wherein the insulation tape has two or more notching patterns, and a flag shape between the two adjacent notching patterns is at least one of a trapezoidal shape, a quadrangular shape, a parallelogrammatic shape, a triangular shape, and a semicircular shape.

16. The insulation tape of claim 14, wherein a shape of the notching pattern of the insulation tape is at least one of a trapezoidal shape, a quadrangular shape, a parallelogrammatic shape, a triangular shape, and a semicircular shape.

17. A secondary battery comprising:

   the jelly roll according to any one of claims 1;
   a battery can configured to accommodate the jelly roll and having an opening portion at one side thereof;
   an electrode terminal riveted through a through-hole formed in a bottom of the battery can;
   a gasket provided between an outer diameter of the through-hole and the electrode terminal; and
   a sealing body configured to seal the opening portion of the battery can.

18. The secondary battery of claim 17, wherein the secondary battery has a cylindrical shape.

19. The secondary battery of claim 17, wherein the first electrode is electrically connected to the electrode terminal, the second electrode is electrically connected to the battery can, and the sealing body is insulated from the battery can.

20. A battery module comprising the secondary battery according to claim 17.

21. A battery pack comprising the secondary battery according to claim 17.

22. A vehicle comprising the battery pack according to claim 21.

EP 4 311 019 A1

[FIG. 1]

[FIG. 2]

21

[FIG. 3]

[FIG. 4]

[FIG. 5]

[FIG. 6]

[FIG. 7]

(a)

(b)

[FIG. 8]

[FIG. 9]

[FIG. 10]

[FIG. 11]

[FIG. 12]

[FIG. 13]

[FIG. 14]

[FIG. 15]

[FIG. 16]

## INTERNATIONAL SEARCH REPORT

International application No.

**PCT/KR2022/018310**

**A. CLASSIFICATION OF SUBJECT MATTER**

**H01M 50/595**(2021.01)i; **H01M 50/586**(2021.01)i; **H01M 10/04**(2006.01)i

According to International Patent Classification (IPC) or to both national classification and IPC

**B. FIELDS SEARCHED**

Minimum documentation searched (classification system followed by classification symbols)

H01M 50/595(2021.01); H01M 10/04(2006.01); H01M 10/052(2010.01); H01M 10/0587(2010.01); H01M 50/10(2021.01); H01M 50/572(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 절연테이프(insulation tape), 젤리롤(jelly roll), 이차전지(secondary battery), 노칭패턴(notching pattern), 전극 조립체(electrode assembly)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0041979 A (SAMSUNG SDI CO., LTD.) 25 April 2018 (2018-04-25)<br>See paragraphs [0004], [0040]-[0042], [0046], [0051], [0053], [0065], [0068] and [0087]; and figures 2-5 and 9-12. | 1-22 |
| A | KR 10-2016-0110610 A (EIG LTD.) 22 September 2016 (2016-09-22)<br>See paragraph [0032]; and figures 2-3. | 1-22 |
| A | WO 2014-088332 A1 (LG CHEM, LTD.) 12 June 2014 (2014-06-12)<br>See paragraphs [0051]-[0052]; and figures 1-4. | 1-22 |
| A | KR 10-2015-0020888 A (LG CHEM, LTD.) 27 February 2015 (2015-02-27)<br>See claim 1; and figure 1. | 1-22 |
| A | KR 10-2020-0039214 A (LG CHEM, LTD.) 16 April 2020 (2020-04-16)<br>See paragraph [0066]; and figure 11. | 1-22 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 March 2023** | **06 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="2" style="text-align:center">INTERNATIONAL SEARCH REPORT<br>Information on patent family members</th><th colspan="2">International application No.<br><br>**PCT/KR2022/018310**</th></tr>
</table>

| Patent document cited in search report | Publication date (day/month/year) | Patent family member(s) | Publication date (day/month/year) |
|---|---|---|---|
| KR 10-2018-0041979 A | 25 April 2018 | KR 10-2312279 B1 | 12 October 2021 |
| | | WO 2018-074773 A1 | 26 April 2018 |
| KR 10-2016-0110610 A | 22 September 2016 | KR 10-1709161 B1 | 23 February 2017 |
| | | US 2017-0373339 A1 | 28 December 2017 |
| | | WO 2016-143955 A1 | 15 September 2016 |
| WO 2014-088332 A1 | 12 June 2014 | CN 104350640 A | 11 February 2015 |
| | | CN 104350640 B | 16 April 2019 |
| | | JP 2015-534239 A | 26 November 2015 |
| | | JP 6049892 B2 | 21 December 2016 |
| | | KR 10-1446160 B1 | 01 October 2014 |
| | | KR 10-2014-0074220 A | 17 June 2014 |
| | | US 10096856 B2 | 09 October 2018 |
| | | US 2014-0242433 A1 | 28 August 2014 |
| KR 10-2015-0020888 A | 27 February 2015 | KR 10-1600605 B1 | 07 March 2016 |
| KR 10-2020-0039214 A | 16 April 2020 | CN 112262491 A | 22 January 2021 |
| | | EP 3849005 A1 | 14 July 2021 |
| | | EP 3849005 A4 | 20 April 2022 |
| | | JP 2021-528811 A | 21 October 2021 |
| | | JP 7206562 B2 | 18 January 2023 |
| | | KR 10-2480958 B1 | 23 December 2022 |
| | | US 2021-0257652 A1 | 19 August 2021 |
| | | WO 2020-071717 A1 | 09 April 2020 |

Form PCT/ISA/210 (patent family annex) (July 2022)

**EP 4 311 019 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210160779
- US 6677082 B
- US 6680143 B